# EUROPÄISCHE PATENTSCHRIFT

(11) **EP 4 124 220 B1**
(45) Veröffentlichungstag und Bekanntmachung des Hinweises auf die Patenterteilung: **23.04.2025**
(21) Anmeldenummer: 22183292.6
(22) Anmeldetag: 06.07.2022
(51) Int. Cl.: A01B 59/043, A01B 69/00, A01B 59/06

(54) **VERFAHREN ZUR UNTERSTÜTZUNG EINES AN EINEM DREIPUNKT-KRAFTHEBER DURCHZUFÜHRENDEN KUPPELVORGANGS**
METHOD FOR SUPPORTING A COUPLING OPERATION TO BE PERFORMED ON A THREE POINT POWER LIFTER
PROCÉDÉ D'AIDE À UN PROCESSUS D'ACCOUPLEMENT À METTRE EN OEUVRE DANS UN RELEVAGE À TROIS POINTS

(30) Priorität: 29.07.2021 DE 102021119683
(43) Veröffentlichungstag der Anmeldung: 01.02.2023
(73) Patentinhaber: Deere & Company, Moline, IL 61265 (US)
(72) Erfinder: Heitlinger, Martin, Mannheim (DE); Reinmuth, Florian, Mannheim (DE); Schaefer, Marc, Mannheim (DE)
(74) Vertreter: Dehnhardt, Florian Christopher

(56) Entgegenhaltungen:
- EP-B1- 3 624 578
- SE-B- 434 000
- US-A1- 2021 127 544

## Beschreibung

Die Erfindung betrifft ein Verfahren zur Unterstützung eines an einem Dreipunkt-Kraftheber eines landwirtschaftlichen Traktors durchzuführenden Kuppelvorgangs, bei dem der Dreipunkt-Kraftheber rechte und linke Unterlenker aufweist, an denen traktorseitige Kupplungsstellen zur Anbringung einer Anbaugeräteschnittstelle vorgesehen sind, die sich mittels einer Stellanordnung bezüglich eines Spreizmaßes, eines Seitenversatzes und/oder einer Höhenposition verstellen lassen.

Die routinemäßige Anbringung landwirtschaftlicher Anbaugeräte an einen Dreipunkt-Kraftheber setzt entsprechende Erfahrung des Bedieners voraus, da die an den freien Enden der Unterlenker befindlichen traktorseitigen Kupplungsstellen, meist Fanghaken zur Aufnahme korrespondierender Kupplungskugeln, in aller Regel von einer Fahrerkabine des landwirtschaftlichen Traktors aus nicht einsehbar sind. Eine mögliche Fehlstellung gegenüber den daran anzubringenden anbaugeräteseitigen Kupplungsstellen ist daher nicht ohne weiteres für den Bediener erkennbar und kann ein wiederholtes Verlassen der Fahrerkabine zum Zwecke der manuellen Korrektur der Unterlenkerstellung erforderlich machen. Ein aus dem Stand der Technik bekanntes Verfahren zur Anbringung eines landwirtschaftlichen Anbaugeräts ist aus der US 2021/127544 A1 bekannt.

Angesichts dessen ist es Aufgabe der vorliegenden Erfindung, ein Verfahren der eingangs genannten Art hinsichtlich einer komfortablen Anbringung einer Anbaugeräteschnittstelle an einem Dreipunkt-Kraftheber eines landwirtschaftlichen Traktors auszubilden.

Diese Aufgabe wird durch ein Verfahren mit den Merkmalen des Patentanspruchs 1 gelöst.

Bei dem erfindungsgemäßen Verfahren zur Unterstützung eines an einem Dreipunkt-Kraftheber eines landwirtschaftlichen Traktors durchzuführenden Kuppelvorgangs weist der Dreipunkt-Kraftheber rechte und linke Unterlenker auf, an denen traktorseitige Kupplungsstellen zur Anbringung einer Anbaugeräteschnittstelle eines Anbaugeräts vorgesehen sind, die sich mittels einer Stellanordnung bezüglich eines Spreizmaßes, eines Seitenversatzes und/oder einer Höhenposition verstellen lassen. Von einer Kontrolleinheit wird in einer von dem landwirtschaftlichen Traktor eingenommenen Ausgangsposition durch Bilderfassung und -analyse mittels einer bildgebenden Einrichtung eine räumliche Ist-Lage anbaugeräteseitiger Kupplungsstellen der Anbaugeräteschnittstelle relativ zu den traktorseitigen Kupplungsstellen ermittelt, wobei der landwirtschaftliche Traktor entlang einer vorgegebenen Bahnkurve in eine zur Anbringung des Anbaugeräts vorgesehene Endposition verbracht und die Stellanordnung nach Maßgabe des Verlaufs der vorgegebenen Bahnkurve von der Kontrolleinheit derart angesteuert wird, dass die traktorseitigen Kupplungsstellen eine zur Anbringung der anbaugeräteseitigen Kupplungsstellen vorgesehene räumliche Soll-Lage einnehmen.

Auf diese Weise wird der Bediener von der Notwendigkeit entlastet, die Unterlenker manuell in eine zur Anbringung der Anbaugeräteschnittstelle geeignete Stellung zu verbringen. Diesem obliegt allenfalls noch die Vorgabe von Fahrtrichtung und Fahrtgeschwindigkeit des landwirtschaftlichen Traktors beim Durchfahren der Bahnkurve.

Die an den freien Enden der Unterlenker vorgesehenen traktorseitigen Kupplungsstellen sind im Allgemeinen durch Fanghaken gebildet, in die von der Anbaugeräteschnittstelle bzw. den anbaugeräteseitigen Kupplungsstellen umfasste Kupplungskugeln einrastbar sind.

Das Spreizmaß beschreibt hierbei einen horizontalen Abstand der traktorseitigen Kupplungsstellen zueinander, wohingegen der Seitenversatz eine gemeinsame horizontale Auslenkung der traktorseitigen Kupplungsstellen aus einer zentrierten bzw. neutralen Mittenstellung wiedergibt. Die Höhenposition bezieht sich ferner auf einen vertikalen Abstand der traktorseitigen Kupplungsstellen gegenüber der Erdoberfläche. Um eine entsprechende Verstellung der beiden Unterlenker vornehmen zu können, sind diese jeweils an einem traktorseitigen Ende mittels zugehöriger Kugelgelenke sowohl in horizontaler als auch vertikaler Richtung schwenkbar angelenkt. Zur Veränderung von Spreizmaß und Seitenversatz umfasst die Stellanordnung individuell längenverstellbare Seitenstabilisatoren, die zwischen dem betreffenden Unterlenker und einer traktorseitigen Abstützstelle verlaufen und sich hydraulisch oder elektrisch betätigen lassen. Die Veränderung der Höhenposition erfolgt hingegen mittels eines hydraulischen Hubwerks gängiger Bauart, das ebenfalls Bestandteil der Stellanordnung ist.

Die Soll-Lage der traktorseitigen Kupplungsstellen, die die Kontrolleinheit unter Zugrundelegung der als bekannt vorausgesetzten Geometrie des verwendeten Dreipunkt-Krafthebers in entsprechende Werte für Spreizmaß, Seitenversatz und Höhenposition transformiert, wird von der Kontrolleinheit idealerweise derart vorgegeben, dass die Fanghaken in der zur Anbringung des Anbaugeräts vorgesehenen Endposition des landwirtschaftlichen Traktors derart unterhalb der Kupplungskugeln der Anbaugeräteschnittstelle fluchtend zu liegen kommen, dass die Unterlenker zum Einhängen der Anbaugeräteschnittstelle mittels des hydraulischen Hubwerks lediglich noch soweit angehoben werden müssen, dass die Kupplungskugeln sicher in die Fanghaken einrasten. Der Oberlenker des Dreipunkt-Krafthebers wird anschließend von Hand in eine obere Kupplungsstelle der Anbaugeräteschnittstelle eingehängt. Damit ist der Kuppelvorgang abgeschlossen und das Anbaugerät betriebsbereit.

Vorteilhafte Weiterbildungen des erfindungsgemäßen Verfahrens gehen aus den Unteransprüchen hervor.

Vorzugsweise wird von der Kontrolleinheit zur Ermittlung der räumlichen Ist-Lage vorab eine optische Identifikation der anbaugeräteseitigen Kupplungsstellen durchgeführt. Diese kann entweder bedienerseitig durch Markierung der über eine Bedien- und Anzeigeeinheit visualisierten anbaugeräteseitigen Kupplungsstellen oder aber selbsttätig auf Grundlage der durchgeführten Bilderfassung und -analyse mittels eines zuvor eingelernten neuronalen Netzwerks, insbesondere eines sogenannten Convolutional Neural Networks, erfolgen. Der landwirtschaftliche Traktor wird hierzu in eine innerhalb eines zur Durchführung des Kuppelvorgangs zulässigen Toleranzbereichs liegende Ausgangsposition verbracht.

Liegt die Ausgangsposition außerhalb des zulässigen Toleranzbereichs, was von der Kontrolleinheit aufgrund der Ist-Lage der anbaugeräteseitigen Kupplungsstellen relativ zu den traktorseitigen Kupplungsstellen sowie des als bekannt vorausgesetzten Stellumfangs der verwendeten Seitenstabilisatoren bzw. des hydraulischen Hubwerks unter Einbeziehung des spezifischen kinematischen Modells des landwirtschaftlichen Traktors erkannt wird, kann der Kuppelvorgang abgebrochen und der Bediener darüber informiert werden. Eine solche Situation ergibt sich beispielsweise dann, wenn sich der landwirtschaftliche Traktor in einem ungünstigen Anstellwinkel in allzu geringem Abstand zum Anbaugerät befindet, sodass dieser nicht ohne mehrfaches Rangieren in eine zur Anbringung des Anbaugeräts geeignete Endposition verbringbar ist.

Die zur Bilderfassung und -analyse verwendete bildgebende Einrichtung kann in Gestalt einer Stereokamera, einer RGB-Kamera oder eines 3D-Laserscanners ausgebildet sein, wobei diese die räumliche Lage der anbaugeräteseitigen Kupplungsstellen vom landwirtschaftlichen Traktor aus optisch erfasst. Im Falle eines Heckkrafthebers befindet sich die bildgebende Einrichtung im Heckbereich des landwirtschaftlichen Traktors. Die bildgebende Einrichtung erlaubt ferner eine optische Erfassung der anbaugeräteseitigen Kupplungsstellen zum Zwecke der Visualisierung auf der Bedien- und Anzeigeeinheit.

Zugleich kann mittels der bildgebenden Einrichtung eine Umfeldüberwachung im Bereich des Dreipunkt-Krafthebers durchgeführt werden. Entlang der zu durchfahrenden Bahnkurve liegende Hindernisse können so rechtzeitig erkannt werden, sodass der Kuppelvorgang erforderlichenfalls abgebrochen und der Bediener darüber informiert werden kann.

Bezüglich der Vorgabe der Bahnkurve gibt es verschiedene Möglichkeiten.

So kann im Falle einer bedienerseitigen Vorgabe von der Kontrolleinheit die Soll-Lage und damit das Spreizmaß, der Seitenversatz und/oder die Höhenposition der traktorseitigen Kupplungsstellen nach Maßgabe eines beobachteten tatsächlichen Verlaufs der Bahnkurve dynamisch angepasst werden. Der tatsächliche Verlauf der Bahnkurve ergibt sich hierbei aus den bedienerseitigen Fahrtrichtungs- und Fahrtgeschwindigkeitsvorgaben und wird von der Kontrolleinheit auf Grundlage GPS-gestützt gewonnener Positionsinformationen oder aber durch Aufzeichnung der Stellung lenkbarer Vorderräder in Verbindung mit der Fahrtgeschwindigkeit des landwirtschaftlichen Traktors ermittelt.

Stellt die Kontrolleinheit aufgrund eines für den landwirtschaftlichen Traktor spezifischen kinematischen Modells fest, dass der landwirtschaftliche Traktor entlang des beobachteten Verlaufs der Bahnkurve nicht in eine zur Anbringung der anbaugeräteseitigen Kupplungsstellen geeignete Endposition verbringbar ist, so wird der Kuppelvorgang abgebrochen. Zugleich kann der Bediener über den Abbruch informiert werden. Dies ist dann der Fall, wenn die Einstellung der erforderlichen Soll-Lage an den traktorseitigen Kupplungsstellen nicht möglich ist, da ansonsten der Stellumfang der verwendeten Seitenstabilisatoren bzw. des hydraulischen Hubwerks überschritten würde.

Andererseits kann der Verlauf der Bahnkurve auch von der Kontrolleinheit rechnerisch auf Grundlage eines kinematischen Modells des landwirtschaftlichen Traktors vorgegeben werden. Im Falle einer rechnerischen Vorgabe der Bahnkurve kann von der Kontrolleinheit die Soll-Lage und damit das Spreizmaß, der Seitenversatz und/oder die Höhenposition der traktorseitigen Kupplungsstellen fest eingestellt werden. Der Bediener kann dann GPS-gestützt entlang der zu durchfahrenden Bahnkurve geleitet werden, wozu deren Verlauf einschließlich korrespondierender Lenkbefehle kartografisch auf der Bedien- und Anzeigeeinheit dargestellt wird. Zusätzlich können entsprechende Sprachanweisungen ausgegeben werden. Andererseits ist es auch denkbar, dass die vorgegebene Bahnkurve durchfahren wird, indem die Lenkung seitens einer zugehörigen Fahrzeugsteuerung autonom erfolgt, die Vorgabe der Fahrtgeschwindigkeit hingegen weiterhin dem Bediener überlassen bleibt. Eine derartige Fahrzeugsteuerung ist bei landwirtschaftlichen Traktoren des Herstellers John Deere unter der Bezeichnung "AutoTrac" bekannt.

Das erfindungsgemäße Verfahren zur Unterstützung eines an einem Dreipunkt-Kraftheber eines landwirtschaftlichen Traktors durchzuführenden Kuppelvorgangs wird im Folgenden anhand der beigefügten Zeichnungen näher beschrieben. Es zeigen:
- Fig. 1: ein schematisch dargestelltes Ausführungsbeispiel einer Anordnung zur Durchführung des erfindungsgemäßen Verfahrens,
- Fig. 2: eine Darstellung eines an einem Dreipunkt-Kraftheber eines landwirtschaftlichen Traktors durchzuführenden Kuppelvorgangs, und
- Fig. 3: ein als Flussdiagramm dargestelltes Ausführungsbeispiel des erfindungsgemäßen Verfahrens.

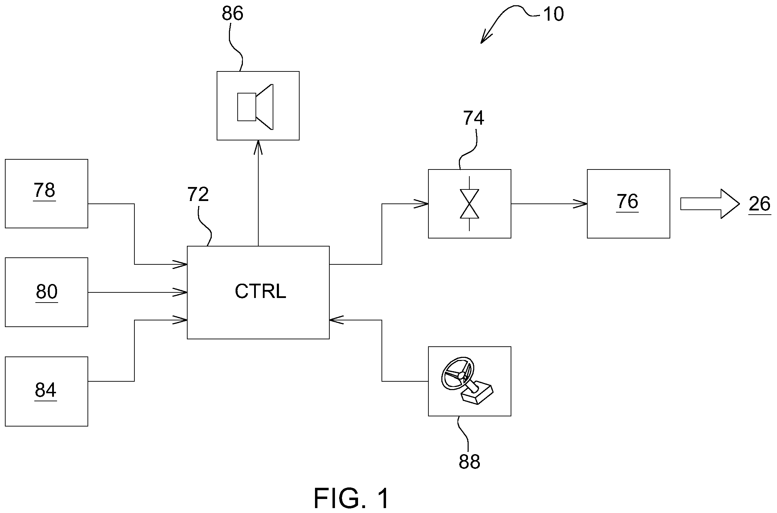

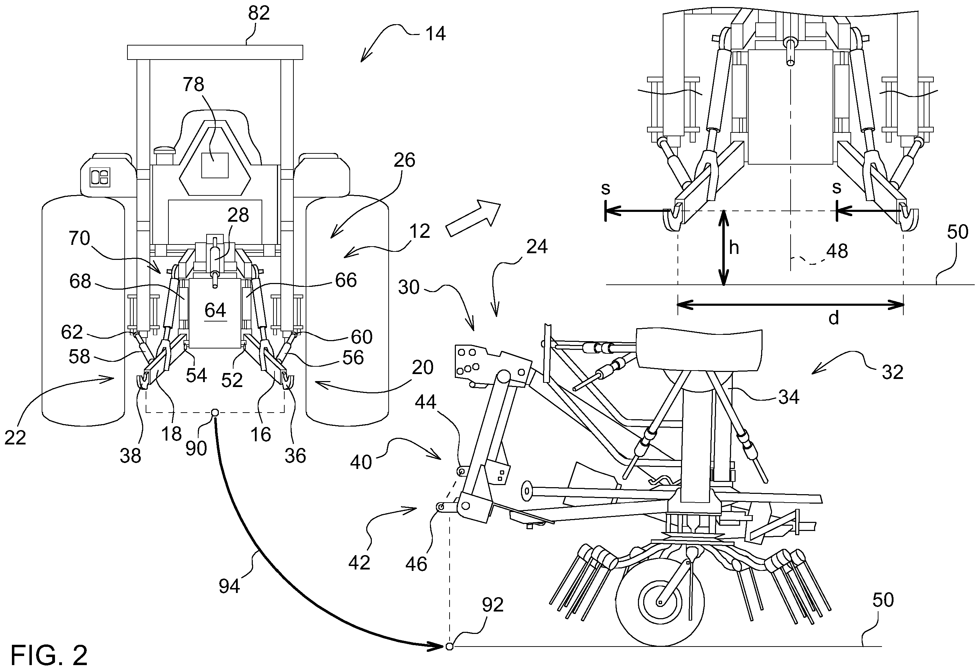

Fig. 1 zeigt ein Ausführungsbeispiel einer Anordnung 10 zur Durchführung des erfindungsgemäßen Verfahrens zur Unterstützung eines an einem Dreipunkt-Kraftheber 12 eines landwirtschaftlichen Traktors 14 gemäß Fig. 2 durchzuführenden Kuppelvorgangs.

Wie in Fig. 2 zu erkennen ist, weist der Dreipunkt-Kraftheber 12 rechte und linke Unterlenker 16, 18 auf, an denen traktorseitige Kupplungsstellen 20, 22 zur Anbringung einer Anbaugeräteschnittstelle 24 vorgesehen sind, die sich mittels einer Stellanordnung 26 bezüglich eines Spreizmaßes, eines Seitenversatzes und/oder einer Höhenposition verstellen lassen. Des Weiteren ist ein Oberlenker 28 vorhanden, der sich in eine obere Kupplungsstelle 30 der Anbaugeräteschnittstelle 24 einhängen lässt. Beispielsgemäß ist das am Dreipunkt-Kraftheber 12 anzubringende Anbaugerät 32 als Kreiselschwader 34 ausgebildet, alternativ kann es sich jedoch auch um ein getragenes oder gezogenes Anbaugerät beliebiger anderer Bauart handeln.

Die an den freien Enden der Unterlenker 16, 18 vorgesehenen traktorseitigen Kupplungsstellen 20, 22 sind durch Fanghaken 36, 38 gebildet, in die von der Anbaugeräteschnittstelle 24 bzw. anbaugeräteseitigen Kupplungsstellen 40, 42 umfasste Kupplungskugeln 44, 46 einrastbar sind. Hierbei beschreibt das Spreizmaß einen horizontalen Abstand d der Fanghaken 36, 38 zueinander, wohingegen der Seitenversatz eine gemeinsame horizontale Auslenkung s der Fanghaken 36, 38 aus einer zentrierten bzw. neutralen Mittenstellung 48 wiedergibt (beispielhaft ist in Fig. 2 eine Auslenkung s nach links angedeutet, diese kann jedoch ebenso gut auch entgegengesetzt gerichtet sein). Die Höhenposition bezieht sich ferner auf einen vertikalen Abstand h der Fanghaken 36, 38 gegenüber der Erdoberfläche 50.

Die insofern definierten Abstände beziehen sich hierbei jeweils auf einen geometrischen Mittelpunkt der betreffenden traktorseitigen Kupplungsstelle 20, 22.

Um eine entsprechende Verstellung der beiden Unterlenker 16, 18 vornehmen zu können, sind diese jeweils an einem traktorseitigen Ende mittels zugehöriger Kugelgelenke 52, 54 sowohl in horizontaler als auch vertikaler Richtung schwenkbar angelenkt. Zur Veränderung von Spreizmaß und Seitenversatz umfasst die Stellanordnung 26 individuell längenverstellbare Seitenstabilisatoren 56, 58, die zwischen dem betreffenden Unterlenker 16, 18 und einer traktorseitigen Abstützstelle 60, 62 im Bereich eines Hinterachsdifferentialgehäuses 64 verlaufen und sich vorliegend hydraulisch betätigen lassen. Die Veränderung der Höhenposition erfolgt mittels rechter und linker Hubzylinder 66, 68 eines hydraulischen Hubwerks 70, das ebenfalls Bestandteil der Stellanordnung 26 ist.

Gemäß Fig. 1 dient eine elektronische Kontrolleinheit 72 als Bestandteil der von dem landwirtschaftlichen Traktor 14 umfassten Anordnung 10 der Ansteuerung der Stellanordnung 26, wozu diese mehrere von der Kontrolleinheit 72 elektrisch betätigbare Ventile 74 umfasst, die mit einem Hydrauliksystem 76 des landwirtschaftlichen Traktors 14 derart zusammenwirken, dass sich die hydraulischen Seitenstabilisatoren 56, 58 bzw. die dem hydraulischen Hubwerk 70 zugeordneten Hubzylinder 66, 68 kontrolliert ein- und ausfahren lassen.

Eine mit der Kontrolleinheit 72 kommunizierende bildgebende Einrichtung 78 in Gestalt einer Stereokamera, einer RGB-Kamera oder eines 3D-Laserscanners dient der optischen Erfassung der räumlichen Lage der anbaugeräteseitigen Kupplungsstellen 40, 42 vom landwirtschaftlichen Traktor 14 aus. Im Falle des in Fig. 2 dargestellten Heckkrafthebers befindet sich die bildgebende Einrichtung 78 im Heckbereich des landwirtschaftlichen Traktors 14.

Die mittels der bildgebenden Einrichtung 78 optisch erfassten anbaugeräteseitigen Kupplungsstellen 40, 42 werden unter anderem auf einer mit der Kontrolleinheit 72 in Verbindung stehenden Bedien- und Anzeigeeinheit 80 visualisiert. Letztere ist als berührungsempfindliches Display ausgebildet und befindet sich in einer Fahrerkabine 82 des landwirtschaftlichen Traktors 14.

Daneben umfasst die Anordnung 10 weitere mit der Kontrolleinheit 72 verbundene Komponenten. Bei diesen handelt es sich um ein Navigationssystem 84, eine Sprachausgabeeinheit 86 sowie eine Fahrzeugsteuerung 88 zur autonomen Lenkung des landwirtschaftlichen Traktors 14. Eine derartige Fahrzeugsteuerung 88 ist bei landwirtschaftlichen Traktoren des Herstellers John Deere unter der Bezeichnung "AutoTrac" bekannt.

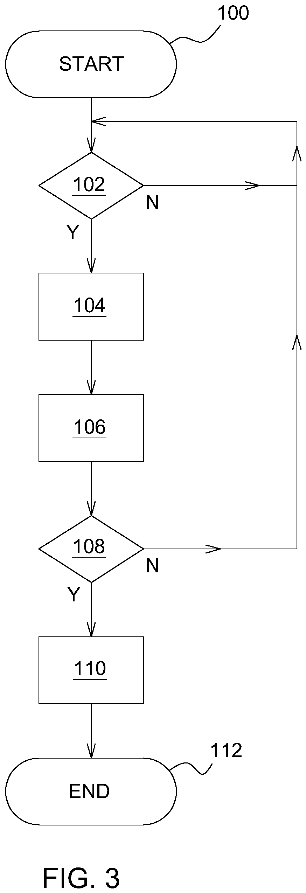

Die Funktionsweise der Anordnung 10 soll nun unter Bezugnahme auf das in Fig. 3 gezeigte Flussdiagramm, das ein Ausführungsbeispiel des erfindungsgemäßen Verfahrens wiedergibt, erläutert werden.

Das von der Kontrolleinheit 72 ausgeführte Verfahren wird bei Inbetriebnahme des landwirtschaftlichen Traktors 14 in einem Startschritt 100 initialisiert, woraufhin in einem ersten Schritt 102 abgefragt wird, ob die Durchführung eines Kuppelvorgangs zwischen landwirtschaftlichem Traktor 14 und Anbaugerät 32 bedienerseitig gewünscht ist. Ist dies der Fall, was der Bediener durch entsprechende Eingabe über die Bedien- und Anzeigeeinheit 80 zu erkennen gibt, wird mit einem zweiten Schritt 104 fortgefahren. Andernfalls kehrt das Verfahren zum ersten Schritt 102 zurück.

Im zweiten Schritt 104 wird von der Kontrolleinheit 72 zunächst eine Umfelderfassung mittels der bildgebenden Einrichtung 78 durchgeführt. Diese hat den Zweck, die innerhalb des Erfassungsbereichs liegende Anbaugeräteschnittstelle 24 bzw. die von dieser umfassten anbaugeräteseitigen Kupplungsstellen 40, 42 zu identifizieren. Die Identifikation erfolgt entweder bedienerseitig durch Markierung der über die Bedien- und Anzeigeeinheit 80 visualisierten anbaugeräteseitigen Kupplungsstellen 40, 42 oder aber selbsttätig im Wege der Bilderfassung und -analyse mittels eines zuvor eingelernten neuronalen Netzwerks, insbesondere eines sogenannten Convolutional Neural Networks. Zur Durchführung der Bilderfassung und -analyse findet die mit der Kontrolleinheit 72 kommunizierende bildgebende Einrichtung 78 Verwendung.

Nach erfolgreicher Identifikation der anbaugeräteseitigen Kupplungsstellen 40, 42 wird in einem dritten Schritt 106 deren räumliche Ist-Lage relativ zu den traktorseitigen Kupplungsstellen 20, 22 ermittelt. Die Ermittlung der Ist-Lage erfolgt im Rahmen der im zweiten Schritt 104 von der Kontrolleinheit 72 durchgeführten Bilderfassung und -analyse.

Die ermittelte Ist-Lage wird in einem vierten Schritt 108 von der Kontrolleinheit 72 herangezogen, um zu überprüfen, ob sich der landwirtschaftliche Traktor 14 in einer innerhalb eines zur Durchführung des Kuppelvorgangs zulässigen Toleranzbereichs liegenden Ausgangsposition 90 befindet.

Liegt die Ausgangsposition 90 außerhalb des zulässigen Toleranzbereichs, was von der Kontrolleinheit 72 aufgrund der ermittelten Ist-Lage der anbaugeräteseitigen Kupplungsstellen 40, 42 relativ zu den traktorseitigen Kupplungsstellen 20, 22 sowie des als bekannt vorausgesetzten Stellumfangs der verwendeten Seitenstabilisatoren 56, 58 bzw. des hydraulischen Hubwerks 70 unter Einbeziehung des spezifischen kinematischen Modells des landwirtschaftlichen Traktors 14 erkannt wird, wird der Kuppelvorgang abgebrochen, und das Verfahren kehrt zum ersten Schritt 102 zurück. Zugleich veranlasst die Kontrolleinheit 72 die Ausgabe einer entsprechenden Bedienerinformation über die in der Fahrerkabine 82 befindliche Bedien- und Anzeigeeinheit 80. Eine solche Situation ergibt sich beispielsweise dann, wenn sich der landwirtschaftliche Traktor 14 in einem ungünstigen Anstellwinkel in allzu geringem Abstand zum Anbaugerät 32 befindet, sodass dieser nicht ohne mehrfaches Rangieren in eine zur Anbringung des Anbaugeräts 32 geeignete Endposition 92 verbringbar ist.

Erkennt die Kontrolleinheit 72 im vierten Schritt 108 hingegen, dass die vom landwirtschaftlichen Traktor 14 eingenommene Ausgangsposition 90 innerhalb des zulässigen Toleranzbereichs liegt, so wird der Bediener in einem fünften Schritt 110 über die Bedien- und Anzeigeeinheit 80 aufgefordert, den Kuppelvorgang durch Heranfahren des landwirtschaftlichen Traktors 14 an das Anbaugerät 32 zu starten. Hierzu wird der landwirtschaftliche Traktor 14 entlang einer vorgegebenen Bahnkurve 94 in die zur Anbringung des Anbaugeräts 32 vorgesehene Endposition 92 verbracht, wobei die Stellanordnung 26 nach Maßgabe des Verlaufs der vorgegebenen Bahnkurve 94 von der Kontrolleinheit 72 derart angesteuert wird, dass die traktorseitigen Kupplungsstellen 20, 22 eine zur Anbringung der anbaugeräteseitigen Kupplungsstellen 40, 42 vorgesehene räumliche Soll-Lage einnehmen. Zugleich wird mittels der bildgebenden Einrichtung 78 eine Umfeldüberwachung im Bereich des Dreipunkt-Krafthebers 12 durchgeführt. Entlang der zu durchfahrenden Bahnkurve 94 liegende Hindernisse werden so rechtzeitig erkannt, sodass der Kuppelvorgang erforderlichenfalls abgebrochen und der Bediener durch entsprechende Ansteuerung der Bedien- und Anzeigeeinheit 80 darüber informiert werden kann.

Die Soll-Lage der traktorseitigen Kupplungsstellen 20, 22, die die Kontrolleinheit 72 unter Zugrundelegung der als bekannt vorausgesetzten Geometrie des verwendeten Dreipunkt-Krafthebers 12 in entsprechende Werte für Spreizmaß, Seitenversatz und Höhenposition transformiert, wird von der Kontrolleinheit 72 im fünften Schritt 110 derart vorgegeben, dass die Fanghaken 36, 38 in der zur Anbringung des Anbaugeräts 32 vorgesehenen Endposition 92 des landwirtschaftlichen Traktors 14 derart unterhalb der Kupplungskugeln 44, 46 der Anbaugeräteschnittstelle 24 fluchtend zu liegen kommen, dass die Unterlenker 16, 18 zum Einhängen der Anbaugeräteschnittstelle 24 mittels des hydraulischen Hubwerks 70 lediglich noch soweit angehoben werden müssen, dass die Kupplungskugeln 44, 46 sicher in die Fanghaken 36, 38 einrasten. Der Oberlenker 28 des Dreipunkt-Krafthebers 12 wird anschließend von Hand in die obere Kupplungsstelle 30 der Anbaugeräteschnittstelle 24 eingehängt. Damit ist der Kuppelvorgang abgeschlossen und das Anbaugerät 32 betriebsbereit. Anschließend wird das Verfahren in einem Schlussschritt 112 beendet.

Bezüglich der Vorgabe der Bahnkurve 94 gibt es verschiedene Möglichkeiten.

### Bedienerseitige Vorgabe

Im Falle einer bedienerseitigen Vorgabe wird von der Kontrolleinheit 72 die Soll-Lage und damit das Spreizmaß, der Seitenversatz und/oder die Höhenposition der traktorseitigen Kupplungsstellen 20, 22 nach Maßgabe eines beobachteten tatsächlichen Verlaufs der Bahnkurve 94 dynamisch angepasst. Der tatsächliche Verlauf der Bahnkurve 94 ergibt sich hierbei aus den bedienerseitigen Fahrtrichtungs- und Fahrtgeschwindigkeitsvorgaben und wird von der Kontrolleinheit 72 auf Grundlage von mittels des Navigationssystems 84 GPS-gestützt gewonnener Positionsinformationen oder aber durch Aufzeichnung der Stellung lenkbarer Vorderräder in Verbindung mit der Fahrtgeschwindigkeit des landwirtschaftlichen Traktors 14 ermittelt.

Stellt die Kontrolleinheit 72 aufgrund eines für den landwirtschaftlichen Traktor 14 spezifischen kinematischen Modells fest, dass der landwirtschaftliche Traktor 14 entlang des beobachteten Verlaufs der Bahnkurve 94 nicht in die zur Anbringung der anbaugeräteseitigen Kupplungsstellen 40, 42 geeignete Endposition 92 verbringbar ist, so wird der Kuppelvorgang abgebrochen, und das Verfahren kehrt zum ersten Schritt 102 zurück. Zugleich veranlasst die Kontrolleinheit 72 die Ausgabe einer entsprechenden Bedienerinformation über die in der Fahrerkabine 82 befindliche Bedien- und Anzeigeeinheit 80. Dies ist dann der Fall, wenn die Einstellung der erforderlichen Soll-Lage an den traktorseitigen Kupplungsstellen 20, 22 nicht möglich ist, da ansonsten der Stellumfang der verwendeten Seitenstabilisatoren 56, 58 bzw. des hydraulischen Hubwerks 70 überschritten würde.

### Rechnerische Vorgabe

Alternativ wird der Verlauf der Bahnkurve 94 von der Kontrolleinheit 72 rechnerisch auf Grundlage eines kinematischen Modells des landwirtschaftlichen Traktors 14 vorgegeben. Im Falle einer rechnerischen Vorgabe der Bahnkurve 94 wird von der Kontrolleinheit 72 die Soll-Lage und damit das Spreizmaß, der Seitenversatz und/oder die Höhenposition der traktorseitigen Kupplungsstellen 20, 22 zu Beginn der Durchführung des Kuppelvorgangs fest eingestellt. Der Bediener wird anschließend GPS-gestützt entlang der zu durchfahrenden Bahnkurve 94 geleitet, wozu deren Verlauf einschließlich korrespondierender Lenkbefehle kartografisch auf Veranlassung des Navigationssystems 84 auf der Bedien- und Anzeigeeinheit 80 dargestellt wird. Zusätzlich werden über die Sprachausgabeeinheit 86 entsprechende Sprachanweisungen ausgegeben. Abweichend davon kann die vorgegebene Bahnkurve 94 auch durchfahren werden, indem die Lenkung seitens der Fahrzeugsteuerung 88 autonom erfolgt, die Vorgabe der Fahrtgeschwindigkeit hingegen weiterhin dem Bediener überlassen bleibt.

## Patentansprüche

1. Verfahren zur Unterstützung eines an einem Dreipunkt-Kraftheber eines landwirtschaftlichen Traktors durchzuführenden Kuppelvorgangs, bei dem der Dreipunkt-Kraftheber (12) rechte und linke Unterlenker (16, 18) aufweist, an denen traktorseitige Kupplungsstellen (20, 22) zur Anbringung einer Anbaugeräteschnittstelle (24) eines Anbaugeräts (32) vorgesehen sind, die sich mittels einer Stellanordnung (26) bezüglich eines Spreizmaßes (d), eines Seitenversatzes (s) und/oder einer Höhenposition (h) verstellen lassen, wobei von einer Kontrolleinheit (72) in einer von dem landwirtschaftlichen Traktor (14) eingenommenen Ausgangsposition (90) durch Bilderfassung und -analyse mittels einer bildgebenden Einrichtung (78) eine räumliche Ist-Lage anbaugeräteseitiger Kupplungsstellen (40, 42) der Anbaugeräteschnittstelle (24) relativ zu den traktorseitigen Kupplungsstellen (20, 22) ermittelt wird, wobei der landwirtschaftliche Traktor (14) entlang einer vorgegebenen Bahnkurve (94) in eine zur Anbringung des Anbaugeräts (32) vorgesehene Endposition (92) verbracht wird, **dadurch gekennzeichnet, dass** die Stellanordnung (26) von der Kontrolleinheit (72) nach Maßgabe des Verlaufs der vorgegebenen Bahnkurve (94) derart angesteuert wird, dass die traktorseitigen Kupplungsstellen (20, 22) eine zur Anbringung der anbaugeräteseitigen Kupplungsstellen (40, 42) vorgesehene räumliche Soll-Lage einnehmen.

2. Verfahren nach Anspruch 1, **dadurch gekennzeichnet, dass** von der Kontrolleinheit (72) zur Ermittlung der räumlichen Ist-Lage vorab eine optische Identifikation der anbaugeräteseitigen Kupplungsstellen (40, 42) durchgeführt wird.

3. Verfahren nach Anspruch 1 oder 2, **dadurch gekennzeichnet, dass** die zur Bilderfassung und -analyse verwendete bildgebende Einrichtung (78) in Gestalt einer Stereokamera, einer RGB-Kamera oder eines 3D-Laserscanners ausgebildet ist.

4. Verfahren nach Anspruch 3, **dadurch gekennzeichnet, dass** mittels der bildgebenden Einrichtung (78) eine Umfeldüberwachung im Bereich des Dreipunkt-Krafthebers (12) durchgeführt wird.

5. Verfahren nach wenigstens einem der Ansprüche 1 bis 4, **dadurch gekennzeichnet, dass** im Falle einer bedienerseitigen Vorgabe der Bahnkurve (94) von der Kontrolleinheit (72) die Soll-Lage und damit das Spreizmaß (d), der Seitenversatz (s) und/oder die Höhenposition (h) der traktorseitigen Kupplungsstellen (20, 22) nach Maßgabe eines beobachteten tatsächlichen Verlaufs der Bahnkurve (94) dynamisch angepasst wird.

6. Verfahren nach Anspruch 5, **dadurch gekennzeichnet, dass** der Kuppelvorgang abgebrochen wird, wenn die Kontrolleinheit (72) aufgrund eines für den landwirtschaftlichen Traktor (14) spezifischen kinematischen Modells feststellt, dass der landwirtschaftliche Traktor (14) entlang des beobachteten Verlaufs der Bahnkurve (94) nicht in eine zur Anbringung der anbaugeräteseitigen Kupplungsstellen (40, 42) geeignete Endposition (92) verbringbar ist.

7. Verfahren nach wenigstens einem der Ansprüche 1 bis 4, **dadurch gekennzeichnet, dass** der Verlauf der Bahnkurve (94) von der Kontrolleinheit (72) rechnerisch auf Grundlage eines kinematischen Modells des landwirtschaftlichen Traktors (14) vorgegeben wird.

8. Verfahren nach Anspruch 7, **dadurch gekennzeichnet, dass** im Falle einer rechnerischen Vorgabe der Bahnkurve (94) von der Kontrolleinheit (72) die Soll-Lage und damit das Spreizmaß (d), der Seitenversatz (s) und/oder die Höhenposition (h) der traktorseitigen Kupplungsstellen (20, 22) fest eingestellt wird.

## Claims

1. Method for assisting a coupling operation to be carried out at a three-point powerlift of an agricultural tractor, in which the three-point powerlift (12) has right and left lower links (16, 18) at which tractor-side coupling points (20, 22) for attaching an implement interface (24) of an implement (32) are provided, which coupling points can be adjusted with respect to a spreading extent (d), a lateral offset (s) and/or a height position (h) by means of an actuator arrangement (26), wherein, in a starting position (90) taken up by the agricultural tractor (14), a control unit (72) is used to determine, by image capture and analysis by means of an imaging device (78), a spatial actual position of implement-side coupling points (40, 42) of the implement interface (24) relative to the tractor-side coupling points (20, 22), wherein the agricultural tractor (14) is brought along a predetermined trajectory (94) into an end position (92) provided for the attachment of the implement (32), **characterized in that** the actuator arrangement (26) is activated by the control unit (72) in accordance with the course of the predetermined trajectory (94) in such a manner that the tractor-side coupling points (20, 22) take up a spatial desired position provided for attaching the implement-side coupling points (40, 42).

2. Method according to Claim 1, **characterized in that**, in order to determine the spatial actual position, an optical identification of the implement-side coupling points (40, 42) is carried out in advance by the control unit (72).

3. Method according to Claim 1 or 2, **characterized in that** the imaging device (78) used for the image capture and analysis is in the form of a stereocamera, an RGB camera or a 3D laser scanner.

4. Method according to Claim 3, **characterized in that** monitoring of the surroundings in the region of the three-point powerlift (12) is carried out by means of the imaging device (78).

5. Method according to at least one of Claims 1 to 4, **characterized in that**, in the event of an operator-side stipulation of the trajectory (94), the desired position and therefore the spreading extent (d), the lateral offset (s) and/or the height position (h) of the tractor-side coupling points (20, 22) is dynamically adapted by the control unit (72) in accordance with an observed actual course of the trajectory (94).

6. Method according to Claim 5, **characterized in that** the coupling operation is stopped if the control unit (72) determines on the basis of a kinematic model specific to the agricultural tractor (14) that the agricultural tractor (14) cannot be brought along the observed course of the trajectory (94) into an end position (92) suitable for attaching the implement-side coupling points (40, 42).

7. Method according to at least one of Claims 1 to 4, **characterized in that** the course of the trajectory (94) is predetermined computationally by the control unit (72) on the basis of a kinematic model of the agricultural tractor (14).

8. Method according to Claim 7, **characterized in that**, in the event of a computational stipulation of the trajectory (94), the desired position and therefore the spreading extent (d), the lateral offset (s) and/or the height position (h) of the tractor-side coupling points (20, 22) is fixedly set by the control unit (72).

## Revendications

1. Procédé pour assister une opération d'accouplement à effectuer sur un relevage à trois points d'un tracteur agricole, dans lequel le relevage à trois points (12) présente des bras inférieurs droit et gauche (16, 18) sur lesquels sont prévus des points d'accouplement (20, 22) côté tracteur pour le montage d'une interface d'outil rapporté (24) d'un outil rapporté (32), qui peuvent être réglés au moyen d'un agencement de réglage (26) par rapport à une mesure d'écartement (d), un décalage latéral (s) et/ou une position en hauteur (h), une unité de contrôle (72) déterminant, dans une position de départ (90) prise par le tracteur agricole (14), par acquisition et analyse d'images au moyen d'un dispositif d'imagerie (78), une position réelle dans l'espace de points d'accouplement (40, 42) côté outil rapporté de l'interface d'outil rapporté (24) par rapport aux points d'accouplement (20, 22) côté tracteur, le tracteur agricole (14) étant amené le long d'une trajectoire (94) prédéfinie dans une position finale (92) prévue pour le montage de l'outil rapporté (32), **caractérisé en ce que** l'agencement de réglage (26) est commandé par l'unité de contrôle (72) en fonction du tracé de la trajectoire (94) prédéfinie de telle sorte que les points d'accouplement (20, 22) côté tracteur occupent une position de consigne dans l'espace prévue pour le montage des points d'accouplement (40, 42) côté outil rapporté.

2. Procédé selon la revendication 1, **caractérisé en ce que** l'unité de contrôle (72) effectue au préalable une identification optique des points d'accouplement (40, 42) côté outil rapporté pour déterminer la position réelle dans l'espace.

3. Procédé selon la revendication 1 ou 2, **caractérisé en ce que** le dispositif d'imagerie (78) utilisé pour l'acquisition et l'analyse d'images est réalisé sous la forme d'une caméra stéréo, d'une caméra RGB ou d'un scanner laser 3D.

4. Procédé selon la revendication 3, **caractérisé en ce qu'**une surveillance de l'environnement est effectuée au moyen du dispositif d'imagerie (78) dans la zone du relevage à trois points (12).

5. Procédé selon au moins l'une quelconque des revendications 1 à 4, **caractérisé en ce que**, dans le cas d'une prédéfinition de la trajectoire (94) par l'opérateur, l'unité de contrôle (72) adapte de manière dynamique la position de consigne et donc la mesure d'écartement (d), le décalage latéral (s) et/ou la position en hauteur (h) des points d'accouplement (20, 22) côté tracteur en fonction d'un tracé réel observé de la trajectoire (94).

6. Procédé selon la revendication 5, **caractérisé en ce que** l'opération d'accouplement est interrompue lorsque l'unité de contrôle (72) constate, sur la base d'un modèle cinématique spécifique au tracteur agricole (14), que le tracteur agricole (14) ne peut pas être amené, le long du tracé observé de la trajectoire (94), dans une position finale (92) appropriée pour le montage des points d'attelage (40, 42) côté outil rapporté.

7. Procédé selon au moins l'une quelconque des revendications 1 à 4, **caractérisé en ce que** le tracé de la trajectoire (94) est prédéfini par calcul par l'unité de contrôle (72) sur la base d'un modèle cinématique du tracteur agricole (14).

8. Procédé selon la revendication 7, **caractérisé en ce que**, dans le cas d'une prédéfinition par calcul de la trajectoire (94), l'unité de contrôle (72) règle de manière fixe la position de consigne et donc la mesure d'écartement (d), le décalage latéral (s) et/ou la position en hauteur (h) des points d'accouplement (20, 22) côté tracteur.
